# EUROPÄISCHE PATENTSCHRIFT

(11) **EP 3 281 098 B1**
(45) Veröffentlichungstag und Bekanntmachung des Hinweises auf die Patenterteilung: **28.04.2021**
(21) Anmeldenummer: 16719755.7
(22) Anmeldetag: 02.03.2016
(51) Int. Cl.: G06F 3/0488

(54) **GESTENSENSITIVER BILDSCHIRM UND RECHNER MIT GESTENSENSITIVEM BILDSCHIRM**
GESTURE-SENSITIVE SCREEN AND COMPUTER WITH GESTURE-SENSITIVE SCREEN
ÉCRAN TACTILE ET ORDINATEUR AVEC ÉCRAN TACTILE

(30) Priorität: 09.04.2015 DE 102015105433
(43) Veröffentlichungstag der Anmeldung: 14.02.2018
(73) Patentinhaber: ATLAS ELEKTRONIK GmbH, 28309 Bremen (DE)
(72) Erfinder: SCHLEICHER, Robert, 28359 Bremen (DE)
(74) Vertreter: thyssenkrupp Intellectual Property GmbH
(86) Internationale Anmeldenummer: PCT/DE2016/100096
(87) Internationale Veröffentlichungsnummer: WO 2016/162009

(56) Entgegenhaltungen:
- GB-A- 2 509 541
- US-A1- 2011 078 566
- US-A1- 2013 167 062
- US-A1- 2014 181 737
- US-A1- 2014 337 783

## Beschreibung

Die Erfindung betrifft einen gestensensitiven Bildschirm mit einer Bildschirmdarstellung, wobei der gestensensitive Bildschirm derart eingerichtet ist, dass bei einem Bedienen mit zwei Fingern auf einer Bildschirmoberfläche oder in der sensitiven Nähe zum gestensensitiven Bildschirm ein Anpassen eines Vergrößerungsbereichs durch ein Auseinanderführen oder ein Zusammenführen der beiden Finger erfolgt, wobei im Vergrößerungsbereich wenigstens ein Teil der Bildschirmdarstellung vergrößert dargestellt ist, und einen Rechner mit einem entsprechenden gestensensitiven Bildschirm.

Insbesondere bei der Bildbearbeitung oder auch bei der Bearbeitung von Messdaten ist es häufig wünschenswert, einzelne Bildpunkte oder sehr kleine Bildbereiche auszuwählen und zu bearbeiten. Dazu bieten die meisten Bildschirme und/oder die dazugehörigen Rechner die Möglichkeit an, bestimmte Teilbereiche des Bildschirms zu vergrößern und einzelne Bereiche mittels einer Maus oder eines speziellen Eingabestifts zu markieren.

Insbesondere bei mobilen Anwendungen oder im Bereich der Messdatenbetrachtung wie beispielsweise auf einem Schiff liegt beispielsweise keine Maus vor oder der Einsatz eines Stiftes kann nicht immer gewährleistet werden, da dieser gegebenenfalls verschwunden oder defekt ist. Mithin ist es dann beispielsweise bei Touchscreens nicht möglich, einzelne kleine Bildpunkte auszuwählen oder es bedarf mehrerer Versuche, bis der relevante Bildpunkt beziehungsweise die relevanten Bildbereiche definiert ausgewählt wurden.

Dies liegt insbesondere an den sogenannten "Fat-Finger"-Problemen. Da Finger wesentlich größer sind als Bildpunkte und sich die Finger auch nicht so fein einstellen lassen, kann beispielsweise unter den oben geschilderten Bedingungen nicht immer gewährleistet werden, dass eine ordentliche Bildbearbeitung beziehungsweise die Auswahl von Bildpunkten realisierbar ist. Desweiteren verdecken die Finger bei einer Berührung zumindest Teile des interessierenden Bereichs.

Aus der GB 2 509 541 A ist ein graphischer Prozessor mit einem Anzeigegerät zur Anzeige einer Bildschirmansicht und ein Vergrößerungswerkzeug zur Anzeige einer vergrößerten Ansicht eines Teils der Bildschirmansicht bekannt, wobei der Vergrößerungsbereich auf der Bildschirmansicht eingeblendet wird. Der Vergrößerungsbereich wird dadurch verschoben, dass ein auf der Originalbildschirmansicht angezeigter hervorgehobener Bereich mit einem Finger gezogen wird, wobei ein Fadenkreuz immer in der Mitte des hervorgehobenen Bereiches angeordnet ist.

Die US 2014/0337783 A1 beschreibt ein Verfahren und eine Vorrichtung zur partiellen Modifikation einer digitalen Illustration, wobei eine graphische Benutzeroberfläche die Illustration aufweist. Hierzu kann ein ausgewählter Teil der Illustration vergrößert werden, indem zum Beispiel eine Zangengriff- und Spreizbewegung des Benutzers als Auswahl eines bestimmten Bereiches der Illustration von einem Eingabedetektionsmodul erfasst wird.

In der US 2014/0181737 A1 ist ein elektronisches Gerät mit einem doppelseitigen, berührungssensitiven Bildschirm zur Anzeige eines Inhalts auf der Vorderseite des Bildschirms offenbart, bei dem eine Berührung des doppelseitigen, berührungssensitiven Bildschirms erkannt wird und eine Vergrößern des berührten, ausgewählten Bereiches mittels eines Vergrößerungsfaktors entsprechend der Länge eines Ziehablaufes erfolgt.

Die US 2011/078566 A1 offenbart einen Prozessor mit einer graphischen Benutzeroberfläche für die Vorschau einer simulierten Druckausgabe, wobei Eingabedaten in einem ersten Farbraum konvertiert werden, um eine Vielzahl von reduzierten Darstellungen der Simulation von Ausgabedaten in einem weiten Farbraum zu erhalten, wobei ein Bewegen eines Fadenkreuzes und eines Vergrößerungsbereiches durch Betätigen einer konventionellen Maus oder Tastatur erfolgt.

Die US 2013/167062 A beschreibt eine Zwei-Finger-Auswahlmethode zur Auswahl eines graphischen Objektes auf einem Berührungsbildschirm, wobei zwei Finger einer Hand beide den Berührungsbildschirm berühren und dieser dynamisch die zwei Berührungspunkte erkennt. Eine Auswahlgraphik wird automatisch als Mittelpunkt der beiden Berührungspunkte angezeigt.

Aufgabe der Erfindung ist es, den Stand der Technik zu verbessern. Gelöst wird die Aufgabe durch einen gestensensitiven Bildschirm mit einer Bildschirmdarstellung, wobei der gestensensitive Bildschirm derart eingerichtet ist, dass bei einem Bedienen mit zwei Fingern auf einer Bildschirmoberfläche oder in der sensitiven Nähe zum gestensensitiven Bildschirm ein Anpassen eines Vergrößerungsbereichs durch ein Auseinanderführen oder ein Zusammenführen der beiden Finger erfolgt, wobei im Vergrößerungsbereich wenigstens ein Teil der Bildschirmdarstellung vergrößert dargestellt ist, wobei im Vergrößerungsbereich ein Fadennetz, insbesondere Fadenkreuz, mit einem Kreuzungspunkt oder Kreuzungsbereich dargestellt ist, und der gestensensitive Bildschirm derart eingerichtet ist, dass bei dargestelltem Vergrößerungsbereich und bei konstantem Abstand der beiden Finger der Vergrößerungsbereich entsprechend einer Bewegung der beiden Finger geführt wird.

Das Fadennetz/-kreuz wird insbesondere durch die berührenden Finger aufgespannt, ohne dass sie den beinhalteten Bereich verdecken.

Durch das Fadennetz kann mittels der Finger und der Augen-Hand-Koordination auf den Bildschirm dezidiert ein Bildpunkt oder eine Bildbereich angesteuert werden. Durch die Vergrößerung können auch sehr kleine Bildpunkte vergrößert und ausgewählt werden, wie diese beispielsweise bei der Bildschirmdarstellung im unvergrößerten Zustand kaum auswählbar wären.

Mithin kann trotz des sogenannten Fat-Finger-Problems ein Bildpunkt oder ein Bildbereich verlässlich angesteuert werden.

### Folgendes Begriffliche sei erläutert:

Ein "gestensensitiver Bildschirm" ist insbesondere ein Bildschirm, welcher beispielsweise Körperbewegungen, wie die Bewegung von Händen und/oder Finger, eingabemittelfrei in eine auf dem Bildschirm dargestellte Aktion überführt. Eingabemittelfrei ist in diesem Fall insbesondere so zu verstehen, dass keine Eingabestifte oder eine Maus zum Einsatz kommen. Insbesondere umfasst der gestensensitive Bildschirm einen Touchscreen, auch bewegungssensitiver Bildschirm genannt, welcher Bewegungen der Finger oder Hand auf der Bildschirmoberfläche in entsprechende Aktionen umsetzt. Allgemein ist ein solcher Touchscreen ein kombiniertes Ein- und Ausgabegerät, bei durch Berühren von Teilen des Bildes (Bildschirmoberfläche) der Programmablauf eines technischen Gerätes, beispielsweise eines Computers, direkt gesteuert werden kann. Im Allgemeinen ist die technische Umsetzung der Befehlseingabe für den Nutzer "unsichtbar" und erzeugt mithin den Eindruck einer unmittelbaren Steuerung eines Computers per Fingerzeig. Ein Touchscreen kann dabei resistiv, oberflächenkapazitiv, projiziert kapazitiv, induktiv, schallwellengesteuert, optisch gesteuert oder mittels eines dispersiven Signals gesteuert werden.

Insbesondere handelt es sich um einen sogenannten Multitouch-Bildschirm. "Multitouch" bezieht sich dabei insbesondere auf die Tatsache, dass auch mehr als eine Eingabeposition gleichzeitig erkannt werden kann.

Eine "Bildschirmdarstellung" ist das auf dem Bildschirm dargestellte Originalbild. Dieses Originalbild wird meistens mit sogenannten "Pixel" aufgebaut. Mithin handelt es sich bei dem Originalbild um eine Rastergraphik, wobei durch die Gesamtanordnung und Farb- und Positionsgestaltung der einzelnen Pixel das Originalbild aufgebaut ist.

Ein "Pixel" wird auch als Bildpunkt oder Bildelement bezeichnet. Der Pixel kann einen Wert aufweisen, welcher beispielsweise sich aufgrund von Farbe über einen Farbraum und Farbtiefe definiert. Im einfachsten Fall handelt es sich um ein Binärbild, bei dem ein Pixel entsprechend einen Schwarz- oder Weiß-Wert speichert und diesen entsprechend anzeigt. Auch weitere Informationen wie beispielsweise Transparenzinformationen können mittels eines Pixels dargestellt werden. Allgemein kann ein Pixel die Farben rot, grün und blau darstellen, durch deren Mischung und benachbarter Pixel ein gewisser Farbeindruck realisierbar ist. Beispielsweise kann ein Bildschirm 1.024 Zeilen und 768 Spalten aufweisen, sodass ein derartiger Bildschirm über 1.024 x 768 Pixel (Bildpunkte) verfügt.

"Finger" sind Teile einer Hand und gehören zu den Akren. Zumeist umfasst eine Hand fünf Finger, zu denen der Daumen, Zeigefinger, Mittelfinger, Ringfinger und kleiner Finger zählen.

Eine "Bildschirmoberfläche" ist insbesondere die Fläche, welche durch die Finger berührbar ist.

Eine "sensitive Nähe" ist der Abstand vom Bildschirm, welcher noch gewährleistet, dass über Bewegung der Finger oder entsprechend der Arme eine Aktion eingabemittelfrei auf dem Bildschirm realisiert werden kann.

Ein "Vergrößerungsbereich" stellt einen Teil der Bildschirmdarstellung so vergrößert dar, dass beispielsweise ein einzelnes Pixel oder sehr kleine Bildpunkte für das Auge eines Bedieners vergrößert dargestellt ist oder sind. Mithin kann beispielsweise ein einzelnes Pixel dann durch mehrere hundert Pixel dargestellt werden. Der "Bereich" ist dabei abgegrenzt und zuvor sichtbare Teile der originalen Bildschirmdarstellung werden dann vom Vergrößerungsbereich "verdeckt".

Ein "Auseinanderführen" oder ein "Zusammenführen" der beiden Finger bedeutet quasi ein Spreizen beispielsweise von Daumen und Zeigefinger sowie die dazu inverse Bewegung. In den extremen Fällen berühren sich die Fingerspitzen von Daumen und Zeigefinger und werden im anderen Extrem lediglich durch die Gegebenheiten der Hand in der maximalen Entfernung von Daumen und Zeigefinger eingeschränkt. In einem einfachen Fall der Bedienung werden beispielsweise die Fingerspitzen von Daumen und Zeigefinger zusammengeführt auf der Bildschirmoberfläche abgelegt und führen eine Spreizung auf dem Bildschirm (Bildschirmoberfläche) aus, sodass beispielsweise ein Vergrößerungsbereich mit einem Durchmesser von 2cm gegeben ist, wobei der Abstand von der Daumenfingerspitze und der Zeigefingerspitze ebenfalls circa 2cm beträgt.

Ein "Fadennetz" wird auch als Strichplatte bezeichnet und wird klassisch (mechanisch) in Mess- oder anderen Fernrohren verwendet. Auch in den Okularen von Mikroskopen können derartige Fadennetze oder Strichplatten eingesetzt werden. Vorliegend wird eine graphische Repräsentanz dieses Fadennetzes auf dem Bildschirm dargestellt. Das Fadennetz, welches im einfachsten Fall beispielsweise ein Fadenkreuz ist, ermöglicht es, vergrößerte Pixel, welche beispielsweise im Vergrößerungsbereich dargestellt sind, mit großer Genauigkeit anzusteuern.

In einer weiteren Ausführungsform kann durch eine Bedienaktion eines Bedieners ein Kreuzungspunkt oder ein Kreuzungsbereich des Fadennetzes ein Teilbereich, insbesondere ein Pixel der Bildschirmdarstellung, des Vergrößerungsbereichs aktiviert und/oder selektiert werden.

Somit kann nicht nur ein einzelnes Pixel anvisiert werden, sondern es kann mit diesem Pixel auch eine gewisse Aktion verbunden sein. Auch ein Selektieren ist beispielsweise dadurch möglich, dass dieser Bildpunkt dann beispielsweise für den dahinterliegenden Rechner "aufgemerkt" und/oder für den Betrachter in einer anderen Farbe dargestellt wird. Somit kann eine Bildbearbeitung mit einzelnen Aktionen für einzelne Bildpunkte wie beispielsweise Pixel oder Bildbereiche auch ohne Eingabestift oder Maus realisiert werden. Beispielsweise erfolgt die entsprechende Aktivierung/Selektion des Pixels/Bildbereichs durch entfernen der Finger von der Bildschirmoberfläche.

Insbesondere wenn das Fadennetz durch eine horizontale und eine vertikale Linie gebildet wird, gibt es einen Bereich, in dem sich diese Linien schneiden. Dieser Bereich wird Kreuzungspunkt genannt. Um diesen Kreuzungspunkt herum liegt ein sogenannter Kreuzungsbereich, dessen Größe entsprechend in den Benutzervorgaben eingestellt werden kann.

Ein "Bediener" ist vorliegend eine Person, welche beispielsweise den gestensensitiven Bildschirm mit seinen Fingern bedient. Der "Teilbereich" des Vergrößerungsbereichs ist ein Bereich, welcher beispielsweise die gleiche Farbgebung oder sonstige gemeinsame Merkmale hat. Beispielsweise kann der Teilbereich mehrere hundert Pixel umfassen, welche wiederum ein einzelnes Pixel der originalen Bildschirmdarstellung repräsentieren.

Ein "Aktivieren" bedeutet das Auslösen einer nachgelagerten Funktion, wobei ein "Selektieren" insbesondere ein Auswählen und mithin späteres Ändern oder Zurverfügungstellen des Bildpunktes oder der durch ihn repräsentierten Messwerte umfasst.

Um Alternativen für die gewünschte Darstellung des Vergrößerungsbereichs bereitstellen zu können, kann der Vergrößerungsbereich kreisförmig und/oder rechteckig ausgestaltet sein.

Dabei umfasst das rechteckig selbstverständlich auch quadratische Strukturen.

Um die Grenzen des Vergrößerungsbereichs für den Bediener kontrastreicher zu gestalten, kann der Vergrößerungsbereich einen Rahmen aufweisen.

Der Rahmen kann dabei beispielsweise durch eine schwarze Linie, welche die Grenzen des Vergrößerungsbereichs umgibt, dargestellt werden.

In einer weiteren Ausführungsform kann der gestensensitive Bildschirm eine Zusatzinformation, insbesondere ein Auswahlmenü und/oder insbesondere eine Teilrahmenskalierung, aufweisen, welche durch die beiden Finger, trotz einer zugehörigen Hand und /oder zu der zugehörigen Hand zugehörige Finger für einen Bediener unbehindert betrachtbar ist.

So kann beispielsweise bei einem Linkshänder, dessen gespreizter Daumen und Zeigefinger für den Linkshänder ein stilisiertes großes "L" bilden, der obere Teil des Rahmens des Vergrößerungsbereichs und der rechte vertikale Teil des Rahmens des Vergrößerungsbereichs eine Skalierung aufweisen, sodass entsprechende Größenverhältnisse ermittelbar sind. Auch kann ein Auswahlmenü vorgesehen sein, welches beispielsweise eine Farbpalette zur Verfügung stellt, sodass beispielsweise der ausgewählte Bereich eine neue Farbe zugewiesen werden kann.

Zudem kann der Bildschirm derart eingerichtet sein, dass dieser erkennt, ob es sich beim Bediener um einen Links- oder Rechtshänder handelt. So kann der Handballen von einem Touchscreen zusätzlich detektiert werden und aus dieser Zusatzinformation und Daumen und Zeigefinger die rechte von der linken Hand unterscheiden.

Eine "Zusatzinformation" kann sowohl Eigenschaften des Bildpunktes selber, wie beispielsweise dessen Farbe, Position und Umfang, oder auch gekoppelte Informationen, wie beispielsweise bei einem Radarsystem die Flugzeugdaten, oder gewünschte zukünftige Funktionalität und Eigenschaften aufweisen.

Eine "Skalierung" ist insbesondere ein Maßstab, an welchem bestimmte Größenverhältnisse ablesbar sind. Ein unbehindertes Betrachten ist insbesondere dann gegeben, wenn der Bediener die vollständige Information erfassen kann, ohne dass seine Hand oder die Finger die Information überdecken oder er zu Ihrer Erkennung seinen Blick auf einen weiter entfernten Bildbereich (e.g. Bildrand) abwenden muss.

Um eine variable Vergrößerung durch eine Bedieneraktion dem Bediener zur Verfügung stellen zu können, kann der gestensensitive Bildschirm derart angepasst sein, dass durch das Anpassen des Vergrößerungsbereichs ein Vergrößerungsfaktor eingestellt ist.

Das Anpassen des Vergrößerungsbereichs kann dabei insbesondere durch das Auseinanderführen und/oder zusammenführen der beiden Finger erfolgen.

Ein "Vergrößerungsfaktor" gibt ein Verhältnis an, wie das vergrößerte Bild zum Originalbild in dem Vergrößerungsbereich dargestellt ist. So kann beispielsweise durch Zusammenführen und Auseinanderführen der Finger der Vergrößerungsfaktor kontinuierlich (inkrementell von 1:1 zu 1:10) oder aber auch schrittweise entsprechend der Fingerspreizung mit Stufen wie beispielsweise Faktor 1:1, 1:3, 1:5 und 1:10 dargestellt werden.

Um den Vergrößerungsbereich vor einem Aktivieren und/oder Selektieren ungehindert betrachten zu können, kann der gestensensitive Bildschirm derart eingestellt sein, dass das Fadennetz zeitversetzt zu den auseinandergeführten oder zusammengeführten Fingern dargestellt ist.

So können beispielsweise die gespreizten Finger über einem bestimmten Bereich des Bildes hinweggleiten und durch Verschieben der Hand bei konstantem Abstand der gespreizten Finger den Vergrößerungsbereich selber verschieben. Sollte in dem Vergrößerungsbereich etwas Interessantes sein, so erscheint beispielsweise nach einer Zeit von 0,5 Sekunden automatisch das Fadennetz, mit dem dann der jeweilige Punkt auswählbar ist. Sollte das Fadennetz nicht gewünscht sein, kann der Bildschirm beispielsweise so eingestellt sein, dass durch ein Zusammenführen der Finger das Fadennetz wieder verschwindet.

Erfindungsgemäß ist der gestensensitive Bildschirm derart ausgestaltet, dass bei dargestelltem Vergrößerungsbereich und bei konstantem Abstand der beiden Finger der Vergrößerungsbereich entsprechend einer Bewegung der beiden Finger geführt wird.

Dies kann beispielsweise durch ein Verschieben der Hand realisiert werden.

In einer weiteren Ausführungsform führt ein erneutes Auseinanderziehen der Finger zu einer Vergrößerung nur des Bereichs innerhalb des Fadennetzes.

In einer weiteren Ausgestaltung wird die Aufgabe gelöst durch einen Rechner, insbesondere Mobilfunktelefon, welcher einen zuvor beschriebenen gestengesteuerten Bildschirm aufweist.

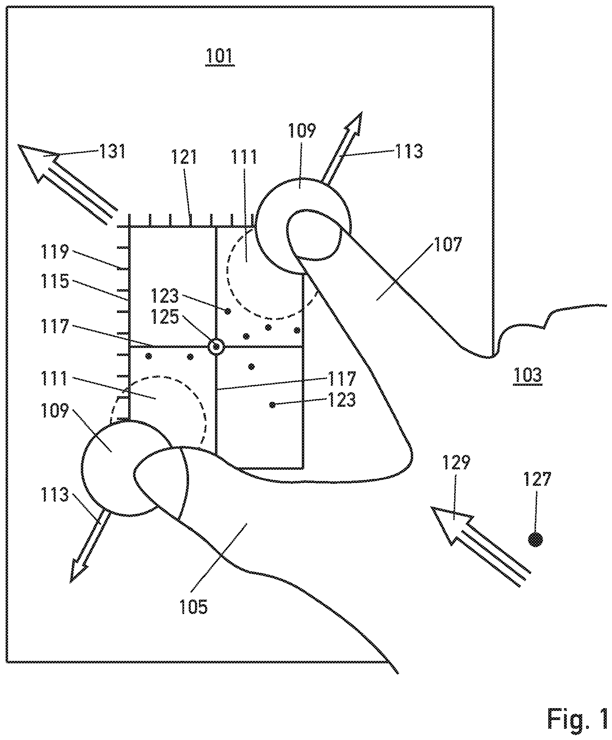

Im Weiteren wird die Erfindung anhand eines Ausführungsbeispiels näher erläutert. Es zeigt
- Figur 1: einen Touchscreen, bei dem der Daumen und Zeigefinger einer Hand eines Bedieners ein Zoomfenster mit einem Fadenkreuz "aufgezogen" hat.

Ein mittels Finger bedienbarer handelsüblicher Touchscreen 101 stellt mittels der darunterliegenden Pixel ein Originalbild (nicht dargestellt) dar.

Ein Bediener berührt mit seinen zusammengeführten Daumen 105 und Zeigefinger 107 seiner Hand 103 die Oberfläche des Touchscreens 101. Durch ein Auseinanderspreizen von Daumen 105 und Zeigefinger 107 erkennen die die Sensoren des Touchscreens 101 mit ihren Sensorfeldern 109auswertenden Algorithmen (Software), 111 und der Spreizrichtung 113 das Auseinanderführen des Daumens 105 und des Zeigefingers 107, sodass ein Zoomfenster 115 mit einer Zoomfensterdiagonalen mit dem Abstand von Fingerspitze des Zeigefingers 107 und Fingerspitze des Daumens 105 aufgezogen wird.

Das Zoomfenster 115 weist dabei eine linkseitige Skala 119 und eine oberseitige Skala 121 auf. In der ersten Verharrposition (abgetastet durch die Sensorfelder 111) von Daumen 105 und Zeigefinger 107 wird der Bereich mit einem Faktor 5 vergrößert dargestellt.

Um den Bereich noch genauer zu analysieren, spreizen sich Daumen 105 und Zeigefinger 107 weiter auf und der Vergrößerungsbereich im Zoomfenster 115 wird auf den Faktor 10 erhöht (zweite Verharrposition (abgetastet durch die Sensorfelder 109)).

Um aus der Vielzahl der Pixel 123 ein gewünschtes zu selektierendes Pixel 125 auszuwählen, verschiebt sich die rechte Hand 103 mit gespreizten Fingern 105, 107 in Verschieberichtung 129. Das nach 0,5 Sekunden erscheinende Fadenkreuz 117 mit seinem Kreuzungsbereich umschließt das selektierte Pixel 125.

Durch ein Abheben der Hand 103 von dem ,Bildschirm in die Tiefenbewegung 127 (aus der Bildebene) weg wird das selektierte Pixel 125 ausgewählt. Zudem erscheint auf dem Touchscreen 101 im oberen rechten Rand ein Aktionsmenü, bei dem die Farbe des Pixels entsprechend einer Farbpalette geändert werden kann beziehungsweise das Pixel entfernt werden kann.

Für den Fall, dass keine Aktion gewünscht ist, werden der Daumen 105 und der Zeigefinger 107 wieder zusammengeführt und anschließend von dem Bildschirm in Tiefenbewegung 127 weggeführt.

### Bezugszeichenliste

- 101: Touchscreen
- 103: Hand
- 105: Daumen
- 107: Zeigefinger
- 109: Sensorfeld
- 111: erste Verharrposition mit Sensorfelder
- 113: Spreizrichtung
- 115: Zoomfenster
- 117: Fadenkreuz
- 119: linkseitige Skala
- 121: oberseitige Skala
- 123: Pixel
- 125: selektiertes Pixel
- 127: Tiefenbewegung der Hand 103
- 129: Verschieberichtung der Hand 103
- 131: gekoppelte Verschieberichtung des Zoomfensters 11

## Patentansprüche

1. Gestensensitiver Bildschirm (101) mit einer Bildschirmdarstellung, wobei der gestensensitive Bildschirm derart eingerichtet ist, dass bei einem Bedienen mit zwei Fingern (105, 107) auf einer Bildschirmoberfläche oder in der sensitiven Nähe zum gestensensitiven Bildschirm ein Anpassen eines Vergrößerungsbereichs (115) durch ein Auseinanderführen oder ein Zusammenführen der beiden Finger erfolgt, wobei im Vergrößerungsbereich (115) wenigstens ein Teil der Bildschirmdarstellung vergrößert dargestellt ist, wobei im Vergrößerungsbereich (115) ein Fadennetz, insbesondere Fadenkreuz (117), mit einem Kreuzungspunkt oder Kreuzungsbereich dargestellt ist, **dadurch gekennzeichnet, dass** der gestensensitive Bildschirm (101) derart eingerichtet ist, dass bei dargestelltem Vergrößerungsbereich (115) und bei konstantem Abstand der beiden Finger (105, 107) der Vergrößerungsbereich (115) entsprechend einer Bewegung der beiden Finger geführt wird.

2. Gestensensitiver Bildschirm (101) nach Anspruch 1, **dadurch gekennzeichnet, dass** durch eine Bedienaktion eines Bedieners der Kreuzungspunkt oder Kreuzungsbereich des Fadennetzes einen Teilbereich, insbesondere ein Pixel (125) der Bildschirmdarstellung, des Vergrößerungsbereichs (115) aktiviert und/oder selektiert.

3. Gestensensitiver Bildschirm (101) nach einem der vorherigen Ansprüche, **dadurch gekennzeichnet, dass** der Vergrößerungsbereich (115) kreisförmig oder rechteckig ausgestaltet ist.

4. Gestensensitiver Bildschirm nach einem der vorherigen Ansprüche, **dadurch gekennzeichnet, dass** der Vergrößerungsbereich (115) einen Rahmen aufweist.

5. Gestensensitiver Bildschirm (101) nach einem der vorherigen Ansprüche, **dadurch gekennzeichnet, dass** der gestensensitive Bildschirm (101) eine Zusatzinformation, insbesondere ein Auswahlmenü und/oder eine Teilrahmenskalierung (119, 121), aufweist, welche durch die beiden Finger (105, 107), einer zugehörigen Hand (103) und/oder zu der zugehörigen Hand (103) zugehörige weitere Finger für den Bediener unbehindert betrachtbar ist.

6. Gestensensitiver Bildschirm (101) nach einem der vorherigen Ansprüche, **dadurch gekennzeichnet, dass** der gestensensitive Bildschirm (101) derart angepasst ist, dass durch das Anpassen des Vergrößerungsbereichs (115) ein Vergrößerungsfaktor eingestellt ist.

7. Gestensensitiver Bildschirm (101) nach einem der vorherigen Ansprüche, **dadurch gekennzeichnet, dass** der gestensensitive Bildschirm (101) derart angepasst ist, dass das Fadennetz zeitversetzt zu den auseinandergeführten oder zusammengeführten Finger (105, 107) dargestellt ist.

8. Rechner, insbesondere Mobiltelefon, welcher einen gestensensitiven Bildschirm (101) nach einem der vorherigen Ansprüche aufweist.

## Claims

1. Gesture-sensitive screen (101) comprising a screen display, wherein the gesture-sensitive screen is configured in such a manner that, during operation with two fingers (105, 107) on a screen surface or in the sensitive vicinity of the gesture-sensitive screen, a magnification area (115) is adjusted by moving the two fingers apart or together, wherein at least one part of the screen display is displayed in a magnified manner in the magnification area (115), wherein a reticle, in particular crosshair (117), with an intersection point or intersection area is displayed in the magnification area (115), **characterized in that** the gesture-sensitive screen (101) is configured in such a manner that, with the magnification area (115) displayed and with a constant distance between the two fingers (105, 107), the magnification area (115) is controlled according to a movement of the two fingers.

2. Gesture-sensitive screen (101) according to claim 1, **characterized in that** the intersection point or intersection area of the reticle activates and/or selects a section, in particular a pixel (125) of the screen display, of the magnification area (115) as a result of an operating action by an operator.

3. Gesture-sensitive screen (101) according to one of the preceding claims, **characterized in that** the magnification area (115) is circular or rectangular.

4. Gesture-sensitive screen according to one of the preceding claims, **characterized in that** the magnification area (115) has a frame.

5. Gesture-sensitive screen (101) according to one of the preceding claims, **characterized in that** the gesture-sensitive screen (101) has an item of additional information, in particular a selection menu and/or subframe scaling (119, 121), which can be viewed without hindrance by the operator through the two fingers (105, 107) of an associated hand (103) and/or further fingers belonging to the associated hand (103).

6. Gesture-sensitive screen (101) according to one of the preceding claims, **characterized in that** the gesture-sensitive screen (101) is adapted in such a manner that a magnification factor is set by adjusting the magnification area (115).

7. Gesture-sensitive screen (101) according to one of the preceding claims, **characterized in that** the gesture-sensitive screen (101) is adapted in such a manner that the reticle is displayed with a time delay with respect to the fingers (105, 107) which have been moved apart or together.

8. Computer, in particular mobile telephone, which has a gesture-sensitive screen (101) according to one of the preceding claims.

## Revendications

1. Écran sensible aux gestes (101) comprenant une présentation d'écran, l'écran sensible aux gestes étant conçu de manière à effectuer, à l'aide de deux doigts (105, 107) sur une surface d'écran ou à proximité sensible de l'écran sensible aux gestes, un réglage d'une zone d'agrandissement (115) par écartement ou rapprochement des deux doigts, au moins une partie de la présentation d'écran étant représentée de manière agrandie dans la zone d'agrandissement (115), un réseau de fils, en particulier une croix (117), pourvu d'un point de croisement ou d'une zone de croisement étant représenté dans la zone de grossissement (115), **caractérisé en ce que** l'écran sensible aux gestes (101) est conçu de telle manière que, lorsque la zone de grossissement (115) est affichée et que la distance entre les deux doigts (105, 107) est constante, la zone de grossissement (115) est guidée conformément au mouvement des deux doigts.

2. Écran sensible aux gestes (101) selon la revendication 1, **caractérisé en ce que** le point de croisement ou la zone de croisement du réseau de fils active et/ou sélectionne une sous-zone, notamment un pixel (125) de la présentation d'écran, de la zone de grossissement (115) par une action de l'opérateur.

3. Écran sensible aux gestes (101) selon l'une des revendications précédentes, **caractérisé en ce que** la zone de grossissement (115) est circulaire ou rectangulaire.

4. Écran sensible aux gestes selon l'une des revendications précédentes, **caractérisé en ce que** la zone de grossissement (115) comporte un cadre.

5. Écran sensible aux gestes (101) selon l'une des revendications précédentes, **caractérisé en ce que** l'écran sensible aux gestes (101) comporte une information supplémentaire, notamment un menu de sélection et/ou un cadrage de cadre partiel (119, 121), qui peut être vus par l'opérateur sans gêne par le biais des deux doigts (105, 107) d'une main associée (103) et/ou d'autres doigts associés à la main associée (103) .

6. Écran sensible aux gestes (101) selon l'une des revendications précédentes, **caractérisé en ce que** l'écran sensible aux gestes (101) est adapté de manière à ce qu'un facteur de grossissement soit réglé par adaptation de la zone de grossissement (115).

7. Écran sensible aux gestes (101) selon l'une des revendications précédentes, **caractérisé en ce que** l'écran sensible aux gestes (101) est adapté de telle sorte que le réseau de fils soit représenté avec un décalage temporel par rapport aux doigts (105, 107) écartés ou rapprochés.

8. Dispositif informatique, en particulier téléphone mobile, qui comporte un écran sensible aux gestes (101) selon l'une des revendications précédentes.
